Europäisches Patentamt

European Patent Office

Office européen des brevets

(19)

(11) Veröffentlichungsnummer: **0 369 359**
**A2**

(12) **EUROPÄISCHE PATENTANMELDUNG**

(21) Anmeldenummer: **89120934.8**

(22) Anmeldetag: **11.11.89**

(51) Int. Cl.⁵: **C07F 7/08**

(30) Priorität: **17.11.88 DE 3838897**

(43) Veröffentlichungstag der Anmeldung:
**23.05.90 Patentblatt 90/21**

(84) Benannte Vertragsstaaten:
**AT BE CH DE ES FR GB GR IT LI LU NL SE**

(71) Anmelder: **HÜLS AKTIENGESELLSCHAFT**
**Paul-Baumann-Strasse 1 Postfach 1320**
**D-4370 Marl 1(DE)**

(72) Erfinder: **Zoche, Günter, Dr.**
**Königsheimstrasse 13**
**D-5300 Bonn 3(DE)**

(54) **Verfahren zur Herstellung von Ketoximosilanen.**

(57) Vorliegende Erfindung beschreibt ein Verfahren zur Herstellung von Ketoximosilanen. Als Ausgangsverbindungen werden Alkyl- bzw. Alkenylacetoxysilane eingesetzt, die mit Ketoximen in Gegenwart eines Amins umgesetzt werden. Die Isolierung der Ketoximosilane erfolgt durch Trennung flüssiger Phasen. Die erfindungsgemäß hergestellten Ketoximosilane sind z. B. wertvolle Vernetzer für Organopolysiloxanmassen.

EP 0 369 359 A2

Xerox Copy Centre

## Verfahren zur Herstellung von Ketoximosilanen

Gegenstand der vorliegenden Erfindung ist ein Verfahren zur Herstellung von Ketoximosilanen. Diese Siliciumverbindungen eignen sich insbesondere als vernetzende Siliciumverbindungen bei der Herstellung von unter Ausschluß von Wasser lagerfähigen und bei Zutritt von Feuchtigkeit bei Raumtemperatur zu Elastomeren härtbaren Massen. Solche Massen werden durch Vermischen von kondensationsfähige Endgruppen aufweisenden Diorganopolysiloxanen und vernetzenden Siliciumverbindungen erhalten.

Es ist bekannt, Ketoximosilane durch Umsetzung von Alkyltrichlorsilanen mit Ketoximen herzustellen (vgl. DE-AS 13 01 140, EP-A2 0 082 324, SU-PS 435 243 und 724 514). Bei der Durchführung dieser Verfahren besteht stets die Gefahr, daß Ketoxim bzw. Ketoximosilan mit anorganischen Substanzen stark saurer Natur in Kontakt kommen. Intermediär entstehendes HCl bildet dann das Hydrochlorid des Ketoxims. Beispielsweise siedet Methylethylketoxim unter Normaldruck bei 152 °C ohne Zersetzung, während sich dessen Hydrochlorid bereits bei 50 bis 70 °C sehr heftig zersetzt. Solche Zersetzungen können außerdem schon durch katalytische Mengen von z. B. $FeCl_3$ ausgelöst werden. Auch Ketoximosilane neigen unter solchen Bedingungen zu explosionsartigen Zersetzungen. L. J. Tyler (Chem. Eng. News 52 (1974) 35, 3) berichtet von zwei heftigen Explosionen dieser Art.

Es ist bekannt, Ketoximosilane durch Umsetzung von Organochlorsilanen mit Ketoximen in Gegenwart von geeigneten Säureakzeptoren und Lösungsmitteln herzustellen (US-PS 3 962 160, US-PS 3 441 583, US-PS 3 341 486, US-PS 3 817 909, DE-AS 13 01 140, DE-AS 11 20 690, DE-AS 12 55 924, FR-PS 11 18 495, EP-PS 0 036 262; W. Noll, Chemie und Technologie der Silikone, Seite 342, Verlag Chemie, Weinheim 1968).

Bei diesen vorbekannten Verfahren fallen als Nebenprodukte in Abhängigkeit von dem eingesetzten Säureakzeptor feste Ammoniumsalze, wie beispielsweise Ammoniumchlorid, oder Amin-Hydrochloride an. Diese Salze fallen zwangsläufig während der Umsetzung als Kristallbrei an. Nach Beendigung der Reaktion wird das entstandene Oximosilan von dem gebildeten Salz abgetrennt, wonach das Salz mit großen Mengen Lösungsmitteln nachgewaschen wird. Da diese Salze in wirtschaftlicher Weise nicht vollkommen saubergewaschen werden können, bringen sie den erheblichen Nachteil mit sich, daß sie an ihrer Oberfläche eine größere Menge des gewünschten Endproduktes, nämlich des Oximosilans, adsorbieren.

Das Filtrat enthält das gewünschte Oximosilan, das nach dem Abdestillieren des Lösungsmittels im Sumpf zurückbleibt. Eine anschließende Destillation des jeweiligen Ketoximosilans muß im Vakuum erfolgen, ist dann aufwendig und nicht ungefährlich, da man sich bei diesem Verfahrensschritt bereits an der Grenze der thermischen Beständigkeit der Ketoximosilane befindet.

Es bestand deshalb die Aufgabe, ein Herstellungsverfahren für Ketoximosilane zu finden, bei dem

a) die Gefahr von Zersetzungen oder Explosionen nicht besteht,

b) keine abzutrennenden Feststoffe entstehen und

c) keine Destillation des Ketoximosilans erforderlich ist.

In Erfüllung dieser Aufgabe wurde nun ein Verfahren zur Herstellung von Ketoximosilanen der allgemeinen Formel I

$$R_n^1 Si(O-N=CR_2^2)_{(4-n)} \quad (I),$$

in der $R^1$ einen Alkylrest mit 1 bis 18 Kohlenstoffatomen und/oder einen Alkenylrest mit 2 bis 18 Kohlenstoffatomen, n eine ganze Zahl von 0 bis 3 und $R^2$ gleiche oder ungleiche Alkylreste mit jeweils 1 bis 6 Kohlenstoffatomen bedeuten, durch Umsetzen eines Acetoxysilans der allgemeinen Formel II

$$R_n^1 (Si(OCOCH_3)_{(4-n)} \quad (II),$$

wobei $R^1$ und n dieselbe Bedeutung wie in der allgemeinen Formel I haben, mit einem Ketoxim der allgemeinen Formel III

$$HO-N=CR_2^2 \quad (III),$$

wobei $R^2$ dieselbe Bedeutung wie in der allgemeinen Formel I hat, gefunden, das dadurch gekennzeichnet ist, daß man zu dem Reaktionsgemisch ein aliphatisches Amin, welches mit der freigesetzten Essigsäure ein unterhalb + 40 °C flüssiges Adduct bildet, zufügt. Zur Abscheidung des flüssigen Adduktes wird ein flüchtiges, inertes, organisches Lösungsmittel zugegeben, in welchem das Produkt der allgemeinen Formel I löslich ist. Nach Abtrennung der Adduktphase wird aus der Lösungsmittelphase durch Abdampfen des Lösungsmittels das Zielprodukt der allgemeinen Formel I erhalten.

Geeignete Amine sind z. B.:
Isopropylamin, Isobutylamin,
sek.-Butylamin, Trimethylamin,
Triethylamin.

Es ist bekannt, daß diese Amine mit wasserfreier Essigsäure Addukte bilden, die bei Raumtemperatur flüssig sind. Die molare Zusammensetzung (Amin : Essigsäure) dieser Addukte ist meistens < 1. Die Bildungsreaktion aus Amin und Essigsäure zum Adduct ist exotherm.

Erfindungsgemäß wird in einigen Fällen auch ohne Zusatz eines Lösungsmittels eine separate Adduktphase erhalten. Die Trennung der lösungsmittelfreien Phasen ist jedoch schwierig, da diese viskos und von ähnlicher Dichte sind.

Geeignete Lösungsmittel sind z. B.: Pentan, Hexan, Heptan, Cyclohexan, 1,1,2-Trichlor-1,2,2-trifluor-ethan.

In diesen Lösungsmitteln sind nur die Addukte schwer löslich, darum bilden sich nach Lösungsmittelzusatz sofort zwei leicht trennbare flüssige Phasen. Aus der abgetrennten Lösungsmittelphase sind die Ketoximosilane durch Abdestillation des Lösungsmittels leicht isolierbar. Im Gegensatz zu anderen bekannten Verfahren (EP-OS 0 273 189, DE-PS 37 03 484) werden diese ohne Destillation im Vakuum als farblose Ketoximosilane erhalten.

Beispiel 1

Vinyl-tri-(ethyl-methyl-ketoximo)-silan

In einem 2-Liter-Kolben werden unter Rühren 232 g (1 Mol) Vinyl-triacetoxy-silan und 274 g (3,15 Mole) Ethyl-methyl-ketoxim zusammengegeben. Unter Kühlung werden anschließend 146 g (2 Mole) sek.-Butylamin so zudosiert, daß die Temperatur des Kolbeninhaltes + 30 °C nicht übersteigt. Die jetzt entstandenen zwei öligen Phasen sind schwer trennbar, darum werden 1 000 ml Pentan hinzugegeben. Die sich jetzt schnell separierenden flüssigen Phasen werden bei 22 °C getrennt. Von der leichteren Phase wird das Pentan bei Normaldruck abdestilliert. Letzte Pentanreste werden bei einer Sumpftemperatur von ca. 80 °C bei 1 mbar abgezogen. Das Vinyl-tris-(ethyl-methyl-ketoximo)-silan bleibt als klare, fast farblose Flüssigkeit zurück.

Beispiel 2

Methyl-tris-(ethyl-methyl-ketoximo)-silan

In einem 2-Liter-Kolben werden unter Rühren 1 200 ml Hexan, 220 g (1 Mol) Methyl-triacetoxy-silan und 274 g (3,15 Mole) Ethyl-methyl-ketoxim zusammengegeben. Unter Kühlung werden anschließend 101 g (1 Mol) Triethylamin so zudosiert, daß die Temperatur des Kolbeninhalts + 40 °C nicht übersteigt. Die zwei schnell separierenden Phasen werden bei 22 °C getrennt. Von der leichteren Phase wird das Hexan bei Normaldruck abdestilliert. Letzte Hexanreste werden bei einer Sumpftemperatur von ca. 80 °C bei 1 mbar abgezogen. Das Methyl-tris-(ethyl-methyl-ketoximo)-silan bleibt als klare, farblose Flüssigkeit zurück.

**Ansprüche**

1. Verfahren zur Herstellung von Ketoximosilanen der allgemeinen Formel I
$$R^1_n Si(O-N=CR^2_2)_{(4-n)} \quad (I),$$
in der $R^1$ einen Alkylrest mit 1 bis 18 Kohlenstoffatomen und/oder einen Alkenylrest mit 2 bis 18 Kohlenstoffatomen, n eine ganze Zahl von 0 bis 3 und $R^2$ gleiche oder ungleiche Alkylreste mit jeweils 1 bis 6 Kohlenstoffatomen bedeuten, durch Umsetzen eines Acetoxysilans der allgemeinen Formel II
$$R^1_n Si(OCOCH_3)_{(4-n)} \quad (II)$$
mit einem Ketoxim der allgemeinen Formel III
$$HO-N=CR^2_2 \quad (III),$$
**dadurch gekennzeichnet,** daß man zu dem Reaktionsgemisch ein aliphatisches Amin, welches mit der freigesetzten Essigsäure ein unterhalb + 40 °C flüssiges Addukt bildet, zufügt und von dem aus zwei flüssigen Phasen bestehenden System die Ketoximosilane durch Abtrennen der Adduktphase isoliert.

2. Verfahren nach Anspruch 1, dadurch gekennzeichnet, daß zur Trennung der flüssigen Phasen ein flüchtiges, inertes, organisches Lösungsmittel zugefügt wird, welches nach der Phasentrennung abdestilliert wird.